# EUROPEAN PATENT APPLICATION

(11) **EP 2 365 662 A2**
(43) Date of publication of application: **14.09.2011**
(21) Application number: 11000355.5
(22) Date of filing: 18.01.2011
(51) Int. Cl.: H04L 12/26, H04W 24/06

(54) **Method and apparatus for active probing of tunneled internet protocol (IP) transmission paths**

(30) Priority: 12.03.2010 US 722633
(71) Applicant: Telefonaktiebolaget L M Ericsson (publ), 164 83 Stockholm (SE)
(72) Inventor: Bertze, Åsa, Stockholm 11240 (SE); Borsos, Tamas, 1147 Budapest (HU); Olsson, Andreas, Stockholm 11216 (SE); Svensson, Håkan, Sture, Magnus, Vallda 43492 (SE); Veres, András, Budapest 1113 (HU)
(74) Representative: Röthinger, Rainer

(57) **Abstract**

A method, apparatus, and system in an IP-based mobile communication network for actively probing a tunneled transmission path from a base station such as an eNB to a core network. A UE-emulator emulates a User Equipment (UE) and provides emulated NAS signaling to a Probe Connection Control (PCC) unit in the base station, which establishes the tunneled transmission path by forwarding the NAS signaling received from the emulator toward the core network. The PCC stores associated communication endpoints and UE-assigned IP addresses. A Probe Traffic Control (PTC) unit within the base station utilizes the stored endpoints and IP addresses to generate probe traffic through the tunneled transmission path toward a probe server or another base station configured as a probe reflector. The probe reflector collects and reports path properties such as packet loss, delay, jitter, and throughput.

## Description

### BACKGROUND

The present invention relates to communication systems. More particularly, and not by way of limitation, the present invention is directed to an apparatus and method for actively probing tunneled transmission paths in Internet Protocol (IP)-based communication systems such as Transmission Control Protocol/Internet Protocol (TCP/IP)-based communication systems.

There are numerous existing solutions to actively probe transmission paths in IP-based systems such as TCP/IP systems. These solutions are all based on test equipments (probes) placed at several places in the network. Probes initiate communication on the lower TCP/IP layer to other probes or to special servers (sometimes called reflectors). The system collects path properties between the probes including packet loss, delay, jitter, and throughput.

For systems utilizing GPRS Tunneling Protocol (GTP) tunnels, there is a GTP ECHO protocol available, which can test the connectivity between two GTP-capable devices (routers). The GTP ECHO protocol is similar to the Internet Control Message Protocol (ICMP) ECHO, but only GTP-capable devices can answer GTP requests. Published International Patent Application No. WO 2008/138509 A1 discloses a method for monitoring a GTP communication path by generating a GTP control message in the form of an ECHO request message.

A problem with existing network probe-based testing systems is that they probe the lower TCP/IP layer of the system. Thus, probing is limited between network sites. On the other hand, for mobility reasons, a mobile system has two TCP/IP layers, and the higher layer is the one that actually represents the end-to-end connectivity across the system.

It should be noted that there are also User Equipment (UE)-based active probing systems. Such UE-based systems, however, adversely consume radio resources, and require extra UE hardware, which is costly to upgrade or replace. Consequently, this solution is mostly used for drive testing, and is generally considered to be too expensive.

### BRIEF SUMMARY OF THE INVENTION

Thus, in mobile telecommunication networks, existing active probing systems do not effectively monitor the system end-to-end path from the base station or eNodeB (eNB) to the core Packet Data Network (PDN). As a result, the following areas cannot be tested:
- It is not possible to monitor probe traffic through the Serving Gateway (SGW) or Serving GPRS Support Node (SGSN) because the probe traffic is not routed across these nodes.
- It is not possible to monitor path performance (including connectivity, loss, delay, etc.) through the PDN Gateway (PDN GW) or Gateway GPRS Support Node (GGSN) because the probe traffic is not routed across these nodes.
- It is not possible to monitor testing of the performance of mobile system users towards servers above the PDN GW or GGSN because there may be no routed path on the Gi interface between an access or core network site and a server.

The present invention solves the above problems. The invention enables the testing of the tunneled TCP/IP layer (i.e., the higher layer in mobile systems) via special probes. In one embodiment, a modification in the base station (for example the eNB in LTE) implements a new Emulated UE function that serves as the handler of signaling from an emulated UE to the core network. The modified eNB behaves as though it is an actual UE and controls the establishment of a PDN connection (tunnel) without any radio connection to a real UE. The established tunnel is then used to send test traffic towards other probes or test servers. In other embodiments, the UE Emulator may be located in an Operations Support System (OSS) or a separate server, from which it communicates using a dedicated communication protocol.

Thus, in one embodiment, the present invention is directed to a computer-controlled method of actively probing a tunneled transmission path in an IP-based mobile communication system. The method includes the steps of establishing the tunneled transmission path by a base station, wherein the base station forwards signaling from an emulated mobile communication device toward a core network; and generating probe traffic through the tunneled transmission path by the base station, the probe traffic being directed toward a probe server or another base station configured as a probe reflector; wherein a management system collects statistics about the probe traffic received at the probe server or other base station.

In another embodiment, the present invention is directed to an apparatus in a base station for actively probing a tunneled transmission path in an IP-based mobile communication system. The apparatus includes means for establishing the tunneled transmission path by forwarding signaling from an emulated mobile communication device toward a core network; and means for generating probe traffic through the tunneled transmission path, the probe traffic being directed toward a probe server or another base station configured as a probe reflector.

In another embodiment, the present invention is directed to a system in an IP-based mobile communication network for actively probing a tunneled transmission path from a base station to a core network. The system includes an emulator for emulating a mobile communication device and providing emulated mobile device signals to the base station; means within the base station for establishing the tunneled transmission path by forwarding the mobile device signals received from the emulator toward a core network; and means within the base station for generating probe traffic through the tunneled transmission path, the probe traffic being directed toward a probe server or another base station configured as a probe reflector.

The present invention makes it possible to monitor test traffic flowing through an SGW or SGSN since the probe traffic is actually routed across these nodes. The invention can also monitor testing of the path performance (including connectivity, loss, delay, and the like) through the PDN GW or GGSN. Additionally, the invention can monitor testing of mobile system users' performance towards servers above the PDN GW or GGSN since there is a routed path between an access or core network site and a server on the Gi interface. Technical personnel can utilize the emulated UEs to perform many different types of test cases much easier than with real active test UEs. The ease of control over the emulated UEs makes the process more convenient and cost effective. Additionally, since the control over multiple emulated UEs is centralized, it is possible to coordinate tests with them from all RAN nodes.

### BRIEF DESCRIPTION OF THE SEVERAL VIEWS OF THE DRAWING

In the following section, the invention will be described with reference to exemplary embodiments illustrated in the figures, in which:
FIG. 1 is a flow chart illustrating the steps of an exemplary embodiment of the method of the present invention;
FIG. 2 is a simplified functional block diagram of an exemplary embodiment of a UE Emulator;
FIG. 3 is a simplified block diagram of a protocol architecture in an exemplary embodiment of the apparatus of the present invention; and
FIG. 4 is a simplified block diagram of a system architecture for an exemplary embodiment of the present invention, indicating major protocol sequences during a test procedure.

### DETAILED DESCRIPTION OF THE INVENTION

The exemplary embodiments described herein assume an SAE/LTE system using GTP tunnels, but the invention is equally applicable to other mobile systems and other tunneling protocols utilizing, for example, Mobile IP.

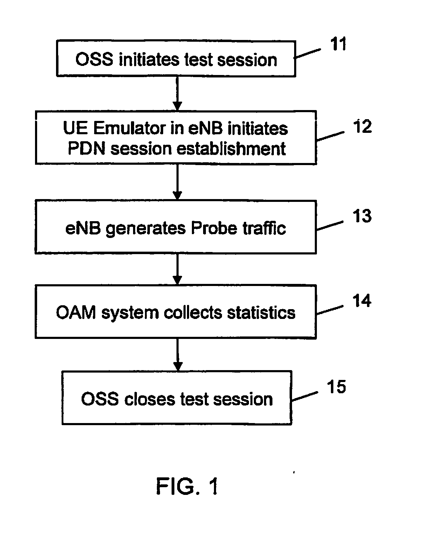

FIG. 1 is a flow chart illustrating the steps of an exemplary embodiment of the method of the present invention. In this embodiment an Operations and Maintenance (OAM) system controls the test procedure although the control functionality may also be implemented in the eNB. Thus, at step 11, an Operations Support System (OSS), which generally performs management, inventory, engineering, planning, and repair functions for the network operator, initiates the test session. At step 12, a UE Emulator initiates PDN session establishment by, for example, sending a PDN connectivity request message to the Core Network and including in the request message, an encapsulated message emulating as if it was coming from a real UE over the radio interface. In different embodiments, the UE Emulator may be located in the eNB, or may be located in the OSS or a separate server, from which it communicates using a dedicated communication protocol. The Core Network processes the request and performs the usual procedures and communication necessary to establish the PDN connection. All Non-Access Stratum (NAS) messages coming to the eNB are forwarded to the UE Emulator, which responds with the necessary NAS messages. These messages are encapsulated by the eNB as if they were coming from the radio interface. At step 13, Probe traffic is initiated between the eNB and the probe server (reflector), or between the eNB and another eNB. When the target node is not a server, probe packets may be routed in point-to-point (p2p) fashion to an IP address owned by another eNB. In such an embodiment, the invention is implemented as a pure eNB-based solution. At step 14, the OAM system collects statistics either from the eNBs or the probe servers (reflectors) depending on the embodiment. At step 15, the OSS closes the test session.

In various embodiments, the present invention thus requires modifications of the eNB and/or the OSS. The new UE Emulator may be implemented in the eNB, the OSS, or as a separate server. When the UE Emulator is implemented in the eNB, there is no protocol required between the UE Emulator and the eNB, just an Application Programming Interface (API). When the UE Emulator is either a separate node or part of the OSS, there is a need for a UE Emulator-eNB-OSS protocol to initiate and control the NAS messages. The protocol may be standardized or proprietary. In this configuration, the UE Emulator can offer emulation service for several sessions, and it can handle multiple UE states in parallel. In addition, there may also be more than one UE Emulator assigned to an eNB.

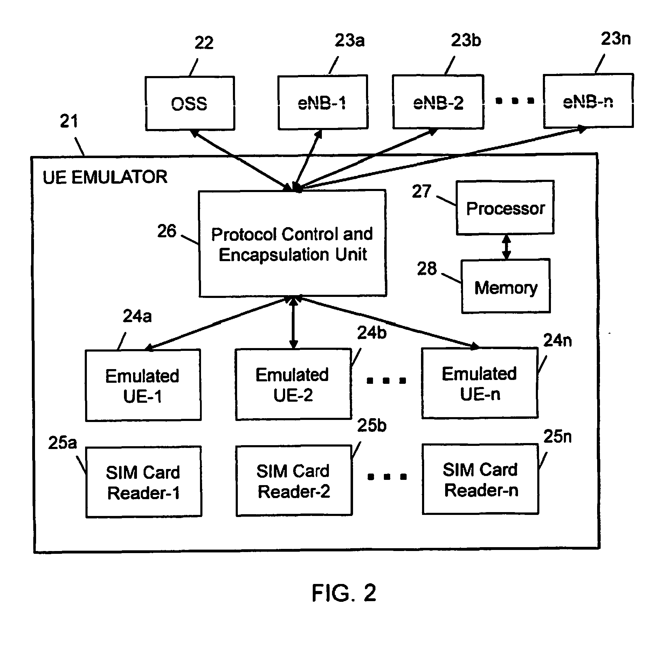

FIG. 2 is a simplified functional block diagram of an exemplary embodiment of a UE Emulator 21. In one embodiment, the UE Emulator is co-located with the OSS 22, and can serve multiple eNBs 23a-23n with a pool of emulated UEs 24a-24n. The UE Emulator may also include a pool of SIM card readers 25a-25n. A Protocol Control and Encapsulation unit 26 coordinates and communicates between the emulated UEs, the OSS, and the eNBs. The operation of the UE Emulator may be controlled by a processor 27 running computer program instructions stored on a memory 28.

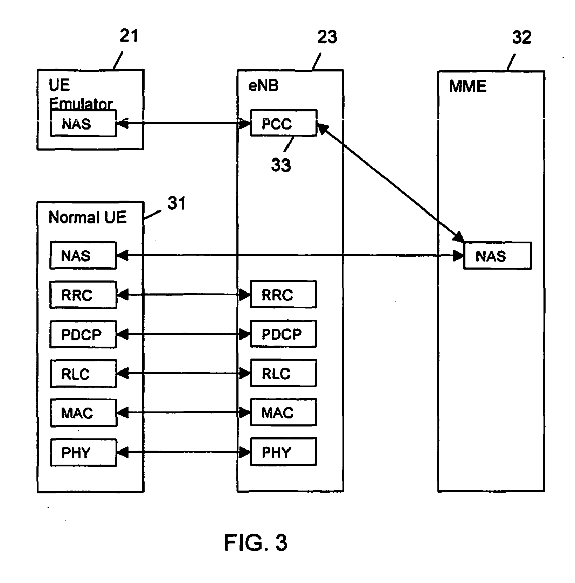

FIG. 3 is a simplified block diagram of a protocol architecture in an exemplary embodiment of the present invention. The figure illustrates the protocol stacks of a normal UE 31, the UE Emulator 21, the eNB 23, and a Mobility Management Entity (MME) 32 in the Core Network. The normal UE implements a protocol stack including the following functions: Non-Access Stratum (NAS), Radio Resource Control (RRC), Packet Data Convergence Protocol (PDCP), Radio Link Control (RLC), Media Access Control (MAC), and Physical layer functions (PHY). The UE Emulator 21 implements a simplified protocol stack, which is essentially that of the normal UE with only the NAS layer functionality so that the UE Emulator can handle all of the NAS communications. As previously noted, the UE Emulator may be implemented within the eNB or an external server or OSS.

The eNB 23 includes a new function referred to as Probe Connection Control (PCC) 33. The PCC is utilized to receive and forward all NAS signaling messages between the UE Emulator 21 and the MME 32. Through the PCC, the eNB requests the UE Emulator for the initial NAS message necessary to initiate the PDN connection, and then forwards all NAS messages coming from the MME to the UE Emulator.

The PCC 33 forwards NAS messages transparently, and performs the necessary encapsulation of all messages coming from the UE Emulator 21 into the necessary protocol messages (SI) towards the Core Network. The eNB-UE Emulator communication may also require a transport protocol if the UE Emulator and eNB PCC are not co-located.

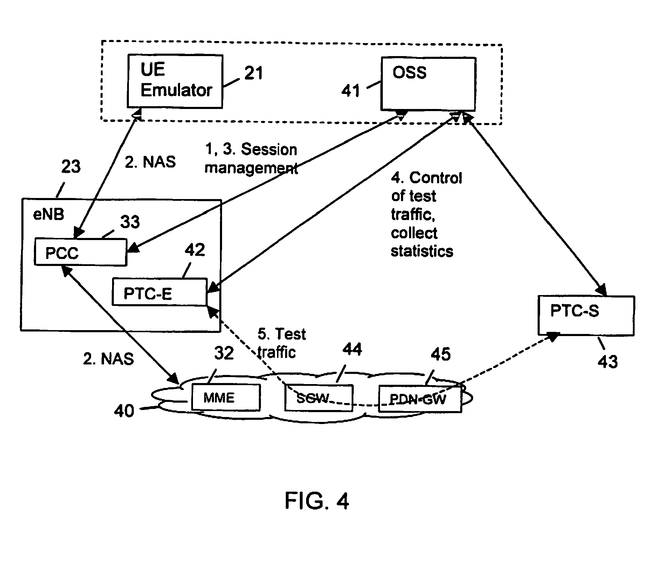

Specifically, when a protocol message arrives that is related to an emulated UE, the PCC 33 in the eNB takes responsibility for the message and performs the following functions:
- The PCC stores associated communication endpoints such as, for example, GPRS Tunneling Protocol (GTP) Tunnel Endpoint Identifiers (TEIDs) together with UE-assigned IP addresses. These endpoints and IP addresses are used by a Probe Traffic Control (PTC) function (see FIG. 4) to generate traffic according to these parameters.
- The PCC follows the UE states as if they were real UEs over the radio interface, and handles the Core Network signaling accordingly. In a Long Term Evolution (LTE) implementation, this includes handling the S1 interface procedures towards the MME.
- The PCC communicates with the OSS and tells whether the PDN connection setup was successful or not.

FIG. 4 is a simplified block diagram of a system architecture for an exemplary embodiment of the present invention, indicating major protocol sequences during a test procedure. In the illustrated embodiment, the UE Emulator is co-located with an OSS 41. At step 1, the OSS initiates the testing session in a message to the PCC 33. At step 2, the UE Emulator 21 sends encapsulated NAS signaling to the PCC, which forwards the NAS signaling to the network 40 to establish PDN connectivity. Once the PDN connection is established, the PCC reports this fact to the OSS at step 3. Thereafter, the OSS instructs a PTC function 42, 43 to control Probe traffic. In order for the PTC function to operate, the PCC 33 must first establish PDN connectivity. There are two PTC varieties. A PTC-E unit 42, which may reside in the eNB 23, and a PTC-S unit 43, which may reside in the PDN Gateway (PDN GW) 45 or in a dedicated server outside the SAE network. Both PTC units can act as a probe generator and a probe reflector. At step 5, the PTC-E unit sends/reflects traffic inside the established PDN tunnel through the Serving Gateway (SGW) 44 and the PDN GW 45.

The test traffic generation follows the well known methods used by probe systems. For example, the PTC units may generate voice-like traffic, web-like TCP downloads, and the like. The PTC units then forward the performance measurement results to the OSS 41.

As will be recognized by those skilled in the art, the innovative concepts described in the present application can be modified and varied over a wide range of applications. Accordingly, the scope of patented subject matter should not be limited to any of the specific exemplary teachings discussed above, but is instead defined by the following claims.

## Claims

1. A computer-controlled method of actively probing a tunneled transmission path in an Internet Protocol (IP)-based mobile communication system, the method comprising the steps of:
establishing the tunneled transmission path by a base station, wherein the base station forwards signaling from an emulated mobile communication device toward a core network; and
generating probe traffic through the tunneled transmission path by the base station, the probe traffic being directed toward a probe server or another base station configured as a probe reflector;
wherein a management system collects statistics about the probe traffic received at the probe server or other base station.

2. The method as recited in claim 1, wherein the IP-based mobile communication system is a Transmission Control Protocol/Internet Protocol (TCP/IP)-based communication system, the mobile communication device is a User Equipment (UE), and the base station is an eNodeB (eNB).

3. The method as recited in claim 2, wherein the step of establishing the tunneled transmission path includes initiating a connectivity request message by a UE Emulator and including in the request message, an encapsulated message emulating as if the encapsulated message was sent from a UE over a radio interface.

4. The method as recited in claim 2 or 3, further comprising emulating the UE by a UE Emulator implemented in the eNB.

5. The method as recited in claim 2 or 3, further comprising:
emulating the UE by a UE Emulator implemented in the management system; and
sending the emulated UE signaling from the management system to the eNB.

6. The method as recited in claim 2 or 3, further comprising:
emulating the UE by a UE Emulator implemented in a server external to the eNB; and
sending the emulated UE signaling from the external server to the eNB.

7. An apparatus in a base station for actively probing a tunneled transmission path in an Internet Protocol (IP)-based mobile communication system, the apparatus comprising:
means for establishing the tunneled transmission path by forwarding signaling from an emulated mobile communication device toward a core network; and
means for generating probe traffic through the tunneled transmission path, the probe traffic being directed toward a probe server or another base station configured as a probe reflector.

8. The apparatus as recited in claim 7, wherein the IP-based mobile communication system is a Transmission Control Protocol/Internet Protocol (TCP/IP)-based communication system, the mobile communication device is a User Equipment (UE), and the base station is an eNodeB (eNB).

9. The apparatus as recited in claim 8, wherein the means for establishing the tunneled transmission path is a Probe Connection Control (PCC) unit configured to receive and forward all Non-Access Stratum (NAS) signaling messages between a UE Emulator and a Mobile Management Entity (MME) in the core network.

10. The apparatus as recited in claim 9, wherein the UE Emulator is configured to initiate a connectivity request message and to include in the request message, an encapsulated message emulating as if the encapsulated message was sent from a UE over a radio interface.

11. The apparatus as recited in claim 9, wherein the UE Emulator is implemented in the eNB and communicates with the PCC unit through an Application Programming Interface (API).

12. The apparatus as recited in claim 9, wherein the UE Emulator is implemented in a network management system, and the eNB includes communication means for sending and receiving the NAS signaling messages with the UE Emulator utilizing a transport protocol.

13. The apparatus as recited in claim 9, wherein the UE Emulator is implemented in a server external to the eNB, and the eNB includes communication means for sending and receiving the NAS signaling messages with the UE Emulator utilizing a transport protocol.

14. The apparatus as recited in any one of claims 9 to 13, wherein the PCC stores associated communication endpoints and UE-assigned IP addresses, and the means for generating probe traffic through the tunneled transmission path includes a Probe Traffic Control (PTC) unit that utilizes the stored endpoints and IP addresses to generate the probe traffic.

15. A system in an Internet Protocol (IP)-based mobile communication network for actively probing a tunneled transmission path from a base station to a core network, the system comprising:
an emulator for emulating a mobile communication device and providing emulated mobile device signals to the base station;
means within the base station for establishing the tunneled transmission path by forwarding the mobile device signals received from the emulator toward a core network; and
means within the base station for generating probe traffic through the tunneled transmission path, the probe traffic being directed toward a probe server or another base station configured as a probe reflector.

16. The system as recited in claim 15, wherein the emulator is implemented within the base station and provides the emulated mobile device signals to the base station through an Application Programming Interface (API);
or wherein the emulator is implemented in a network management system external to the base station and provides the emulated mobile device signals to the base station through a transport protocol;
or wherein the emulator is implemented in a server external to the base station and provides the emulated mobile device signals to the base station through a transport protocol.

17. The system as recited in claim 15 or 16, further comprising a probe reflector implemented in a second base station or a probe server for receiving the probe traffic through the tunneled transmission path and collecting path properties between the probe traffic generator and the probe reflector, and
wherein the path properties collected by the probe reflector optionally include one or more of packet loss, delay, jitter, and throughput.
